# EUROPÄISCHE PATENTSCHRIFT

(11) **EP 4 058 676 B1**
(45) Veröffentlichungstag und Bekanntmachung des Hinweises auf die Patenterteilung: **25.10.2023**
(21) Anmeldenummer: 21714801.4
(22) Anmeldetag: 24.03.2021
(51) Int. Cl.: F15B 15/19

(54) **PYROTECHNISCHER AKTUATOR**
PYROTECHNIC ACTUATOR
ACTIONNEUR PYROTECHNIQUE

(30) Priorität: 24.03.2020 AT 502452020
(43) Veröffentlichungstag der Anmeldung: 21.09.2022
(73) Patentinhaber: Astotec Automotive GmbH, 2552 Hirtenberg (AT)
(72) Erfinder: MARKER, Markus, 2560 Grillenberg (AT)
(74) Vertreter: Müllner, Martin
(86) Internationale Anmeldenummer: PCT/AT2021/060096
(87) Internationale Veröffentlichungsnummer: WO 2021/189089

(56) Entgegenhaltungen:
- AT-U1- 11 267
- DE-A1-102011 086 823

## Beschreibung

### Technisches Gebiet

Die vorliegende Erfindung betrifft einen Aktuator mit einem Gehäuse, mit einer pyrotechnischen Ladung und mit einem Kolben, der in einen Bolzen übergeht, welcher im Ausgangszustand aus dem Gehäuse ragt und bei Zündung der pyrotechnischen Ladung zumindest teilweise in das Gehäuse gezogen wird.

### Stand der Technik

Die FMVSS 208 (Federal Motor Vehicle Safety Standard 208) stellt hohe Anforderungen an die Sicherheitseinrichtungen im Front Crash. Der Lastfall der nicht angegurteten 5% Frau ist mit dem angegurteten 95% Mann nur schwer gleichzeitig erfüllbar, weshalb viele OEMs auf adaptive Systeme setzen, die je nach Insassenposition und Zustand des Gurts andere Rückhaltewerte erzeugen. Diese Notwendigkeit wird durch den Trend zum autonomen Fahren und die damit verbundenen zusätzlich möglichen Insassenpositionen noch verstärkt. Die Adaptivität kann entweder durch unterschiedliche Nachgiebigkeit der Lenksäule oder eine Beeinflussung des Aufblasverhaltens der Airbags erreicht werden. In beiden Fällen müssen mechanische Verbindungen gelöst werden, wofür Pinpuller gut geeignet sind. Nachteilig ist der höhere Preis der klassischen Pinpuller im 90°-Design, wie z.B. in US 4412420 oder in US 2007/0240417 A1 dargestellt, weshalb günstigere Lösungen gesucht werden.

Im österreichischen Gebrauchsmuster AT 11267U , von dem der Oberbegriff ausgeht, ist eine derartige kostengünstige Lösung dargestellt, bei der sowohl das Gehäuse als auch der Kolben aus Kunststoff bestehen. Diese Lösung erfüllt aber die Anforderungen hinsichtlich auftretender radialer Kräfte bei der Auslösung eines Airbags nicht.

DE 102011086823 A1 beschreibt einen Geberzylinder mit einem im Wesentlichen zylindrischen Gehäuse, in dem ein Koben axial verschiebbar angeordnet ist, der einen mit einer Hydraulikflüssigkeit gefüllten Druckraum begrenzt und bei Betätigung des Geberzylinders mittels einer auf den Kolben wirkenden Kolbenstange axial verschoben wird und dadurch die Hydraulikflüssigkeit mit Druck beaufschlagt. Zwischen dem Gehäuse und dem Kolben sind voneinander beabstandete Dichtmittel vorgesehen, wobei das eine Dichtmittel am Gehäuse anliegt und das andere Dichtmittel mit dem Kolben verbunden ist. Um Abrasion zwischen den Dicht- und Laufflächen entgegenzuwirken und Quietschgeräusche zu vermeiden, besteht der Kolben aus einem Grundkörper, der von einer Hülle umgeben ist.

JP H07205793 A offenbart ein Verfahren zur Herstellung einer Kolben/Bolzen-Kombination. Ein Metallrohr wird von Harz umgossen und mit dem Harz formschlüssig verbunden. In dem Harz sind Glasfasern enthalten. Durch den Fließweg des Harzes und der darin enthaltenen Glasfasern wird sichergestellt, dass der Teil des Harzes mit größerem Durchmesser sicher verbunden ist.

### Darstellung der Erfindung

Es ist Aufgabe der vorliegenden Erfindung, einen Aktuator der eingangs genannten Art zu schaffen, bei dem die Herstellungskosten nur geringfügig höher sind als bei der Lösung gemäß AT 11267 U1, dessen Bolzen aber dennoch wesentlich höhere radiale Kräfte aufnehmen kann.

Diese Aufgabe wird durch einen Aktuator der eingangs genannten Art erfindungsgemäß dadurch gelöst, dass die Kolben/Bolzenkombination aus einem Grundkörper aus Kunststoff besteht, der im Bereich des Bolzens ein Verstärkungselement aufweist, das die Form einer Hülse bzw. eines Rohrs besitzt und den Bolzen umgibt, und dass das Verstärkungselement formschlüssig mit dem Bolzen verbunden ist.

Solch eine Kolben/Bolzenkombination lässt sich relativ einfach mittels eines 2K-Spritzgussverfahrens herstellen, indem das Verstärkungselement in ein Spritzgusswerkzeug eingelegt wird und danach die Kolben/Bolzen-Kombination im 2K-Spritzgussverfahren spritzgegossen wird. Dadurch hat man wie bei der Lösung gemäß AT 11267 U1 die Möglichkeit, dem Kolben eine komplizierte Form zu geben, insbesondere die pyrotechnische Ladung im Kolben unterzubringen, da der Grundkörper spritzgegossen wird, dennoch weist der Bolzen infolge des Verstärkungselements eine hohe Biegesteifigkeit auf, die einer metallischen Kolben/ Bolzenkombination nahe kommt.

Da das Verstärkungselement erfindungsgemäß die Form einer Hülse bzw. eines Rohrs besitzt und den Bolzen umgibt, wird die radiale Festigkeit bei gleichem Materialaufwand für das Verstärkungselement wesentlich stärker gesteigert. Für eine möglichst zuverlässige Verbindung zwischen dem Verstärkungselement und dem Grundkörper ist erfindungsgemäß vorgesehen, dass das Verstärkungselement formschlüssig mit dem Bolzen verbunden ist. Dadurch ist ein ungewolltes Lösen des Verstärkungselements, das bei einer rein stoffschlüssigen Verbindung denkbar ist, mit Sicherheit ausgeschlossen.

Die formschlüssige Verbindung kann dadurch erzielt werden, dass das Verstärkungselement zumindest eine Formgebung zur Reduktion des inneren Querschnitts besitzt.

Das Verstärkungselement kann aus Metall bestehen.

Alternativ dazu kann das hülsenförmige Verstärkungselement aus Kunststoff, insbesondere aus PPS oder teilaromatischem Polyamid, bestehen. Solche Hochleistungskunststoffe weisen nicht nur eine hohe Wärmeformbeständigkeit aus, sodass sie einem Spritzgießvorgang standhalten, sondern sie weisen - wenn sie die Form einer Hülse haben - auch ausreichende Festigkeit auf, um die erfindungsgemäß angestrebte höhere radiale Festigkeit zu erzielen.

Wenn zwischen dem Bolzen und dem Gehäuse eine O-Ring-Dichtung vorgesehen ist, ist es günstig, wenn sich das Verstärkungselement vom freien Ende des Bolzens bis hinter diese O-Ring-Dichtung erstreckt. Auf diese Weise wird einerseits der gesamte relevante Bereich verstärkt, und andererseits gleitet im Fall eines hülsenförmigen Verstärkungselements der O-Ring, wenn der Bolzen zurückgezogen wird, immer auf demselben Material, sodass eine gute Führung bewirkt wird.

Die Festigkeit des Aktuators kann zusätzlich dadurch erhöht werden, dass das Gehäuse aus Metall besteht.

Dabei kann das Gehäuse eine Einschnürung besitzen, die in eine umlaufende Ausnehmung des Kolbens ragt und so den Weg zwischen der Ausgangslage und der Endlage des Kolbens begrenzt. Diese Einschnürung kann bei einem metallischen Gehäuse leicht durch plastische Deformation hergestellt werden, nachdem der Kolben in das Gehäuse eingesetzt wurde.

Es ist günstig, wenn in der Ausnehmung Strukturen zur Energieaufnahme, insbesondere Abscherelemente, vorgesehen sind. Dadurch wird nicht nur der Kolben zunächst in der Ausgangslage fixiert, sondern er wird auch schonend abgebremst, bevor das Ende der umlaufenden Ausnehmung an der Einschnürung anschlägt. Geschähe dies mit zu großer Energie, bestünde die Gefahr, dass das Gehäuse aufgeweitet wird und die Kolben/Bolzenkombination aus dem Gehäuse geschleudert wird.

Um dies zu verhindern, ist nach einem weiteren Merkmal der Erfindung vorgesehen, dass das Gehäuse zur Versteifung einen Kragen besitzt.

Wenn die pyrotechnische Ladung in Form eines Zünders im Kolben angeordnet ist, kann in kostengünstiger Weise die Retaineraufnahme für den Stecker durch das freie Ende des Kolbens gebildet werden, also einfach mitgespritzt werden.

### Kurze Beschreibung der Zeichnungen

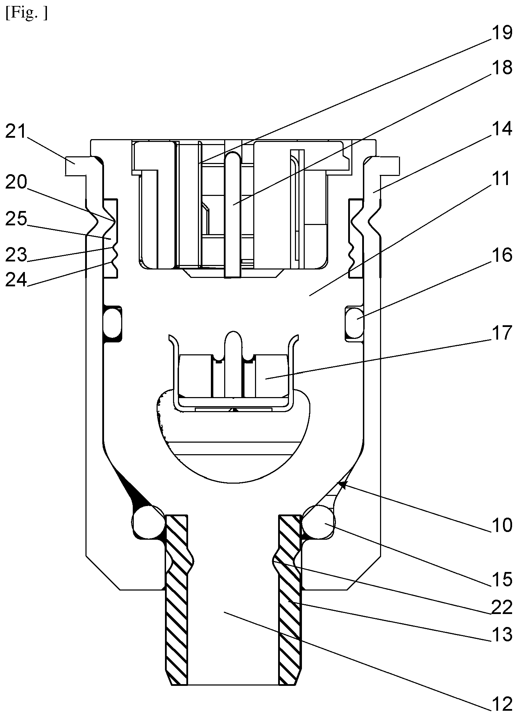

Anhand der beiliegenden Zeichnung wird die vorliegende Erfindung näher erläutert. Die einzige Figur zeigt einen erfindungsgemäßen Aktuator im Längsschnitt.

### Bester Weg zur Ausführung der Erfindung

Der Aktuator weist ein Gehäuse 14 auf, in welchem ein Kolben 11 verschiebbar geführt ist. Dieser Kolben 11 geht in einen Bolzen 12 über. Die Kolben/ Bolzenkombination besteht aus einem Grundkörper 10 und einem Verstärkungselement 13, welches in Form einer Hülse den Bolzen 12 umgibt.

Damit eine formschlüssige Verbindung zwischen dem Grundkörper 10 und dem Verstärkungselement 13 besteht, weist das Verstärkungselement 13 eine Formgebung 22 zur Reduktion des inneren Querschnitts auf, in diesem Fall ist dies eine umlaufende Sicke. Wenn der Grundkörper 10 durch Spritzgießen hergestellt wird, während sich das Verstärkungselement 13 bereits in der Spritzgußform befindet, schmiegt sich der Grundkörper 10 dieser Sicke an, wodurch sich eine formschlüssige Verbindung ergibt.

Die Kolben/Bolzenkombination ist gegenüber dem Gehäuse 14 durch zwei O-Ring-Dichtungen 15, 16 abgedichtet. Eine O-Ring-Dichtung 16 befindet sich etwa in der Mitte des Kolbens 11, die andere O-Ring-Dichtung 15 befindet sich an dem Ende des Bolzens 12, welches dem Kolben 11 zugewendet ist. Das Verstärkungselement 13 erstreckt sich vom freien Ende des Bolzens 12 bis zu dieser O-Ring-Dichtung 15, sodass beim Zurückziehen des Bolzens 12 die O-Ring-Dichtung 15 nur an dem Verstärkungselement 13 gleitet.

Der Kolben 11 weist eine umlaufende Ausnehmung 25 in Form einer Nut auf, in die eine Einschnürung 20 des Gehäuses 14 ragt. Dadurch wird der Weg zwischen der Ausgangslage und der Endlage des Kolbens 11 begrenzt. In dieser Ausnehmung 25 befinden sich Abscherelemente 23, 24, sodass der Kolben 11 nach der Auslösung schonend abgebremst wird und somit die Kräfte auf das Gehäuse 14 verringert werden, wenn das dem Bolzen 12 zugewandte Ende der Ausnehmung 25 an der Einschnürung 20 aufschlägt. Durch diesen Aufschlag wirken erhebliche Kräfte auf das Gehäuse 14 ein, die versuchen, das Gehäuse aufzuweiten. Um solch eine Aufweitung zu verhindern, weist das Gehäuse 14 an dem dem Bolzen 12 abgewandten Ende einen Kragen 21 auf.

Eine pyrotechnische Ladung 17 befindet sich in Form eines Zünders im Kolben 11. Sie kann - bei der Herstellung des Grundkörpers 10 mittels eines Spritzgießverfahrens - einfach umspritzt werden, sodass kaum ein zusätzlicher Herstellungsaufwand entsteht. Der Zünder hat zwei Anschluss-Pins 18, die über einen Stecker (nicht dargestellt) mit der Fahrzeugelektrik verbunden werden. Damit nur der korrekte Stecker angeschlossen werden kann, ist eine sogenannte Retaineraufnahme 19 mit einer speziellen Kontur vorgesehen, welche Retaineraufnahme 19 im gleichen Spritzgießverfahren geformt werden kann, sodass für diese kein zusätzlicher Herstellungsaufwand entsteht.

## Patentansprüche

1. Aktuator mit einem Gehäuse (14), mit einer pyrotechnischen Ladung (17) und mit einem Kolben (11), der in einen Bolzen (12) übergeht, welcher im Ausgangszustand aus dem Gehäuse (14) ragt und bei Zündung der pyrotechnischen Ladung (17) zumindest teilweise in das Gehäuse (14) gezogen wird, wobei die Kolben/Bolzenkombination aus einem Grundkörper (10) aus Kunststoff besteht, **dadurch gekennzeichnet, dass** der Grundkörper (10) im Bereich des Bolzens (12) ein Verstärkungselement (13) aufweist, das die Form einer Hülse bzw. eines Rohrs besitzt und den Bolzen (12) umgibt, **und dass** das Verstärkungselement (13) formschlüssig mit dem Bolzen (12) verbunden ist.

2. Aktuator nach Anspruch 1, **dadurch gekennzeichnet, dass** das hülsen- bzw. rohrförmige Verstärkungselement (13) zumindest eine Formgebung (22) zur Reduktion des inneren Querschnitts besitzt.

3. Aktuator nach Anspruch 1 oder 2, **dadurch gekennzeichnet, dass** das Verstärkungselement (13) aus Metall besteht.

4. Aktuator nach einem der Ansprüche 1 oder 2, **dadurch gekennzeichnet, dass** das hülsenförmige Verstärkungselement (13) aus Kunststoff, insbesondere aus PPS oder teilaromatischem Polyamid, besteht.

5. Aktuator nach einem der Ansprüche 1 bis 4, **dadurch gekennzeichnet, dass** zwischen dem Bolzen (12) und dem Gehäuse (14) eine O-Ring-Dichtung (15) vorgesehen ist und dass sich das Verstärkungselement (13) vom freien Ende des Bolzens (12) bis hinter diese O-Ring-Dichtung (15) erstreckt.

6. Aktuator nach einem der Ansprüche 1 bis 5, **dadurch gekennzeichnet, dass** das Gehäuse (14) aus Metall besteht.

7. Aktuator nach einem der Ansprüche 1 bis 6, **dadurch gekennzeichnet, dass** das Gehäuse (14) eine Einschnürung (20) besitzt, die in eine umlaufende Ausnehmung (25) des Kolbens (11) ragt und so den Weg zwischen der Ausgangslage und der Endlage des Kolbens (11) begrenzt.

8. Aktuator nach Anspruch 7, **dadurch gekennzeichnet, dass** in der Ausnehmung (25) Strukturen zur Energieaufnahme, insbesondere Abscherelemente (23, 24), vorgesehen sind.

9. Aktuator nach einem der Ansprüche 1 bis 8, **dadurch gekennzeichnet, dass** das Gehäuse (14) zur Versteifung einen Kragen (21) besitzt.

10. Aktuator nach einem der Ansprüche 1 bis 9, **dadurch gekennzeichnet, dass** die pyrotechnische Ladung (17) in Form eines Zünders im Kolben (11) angeordnet ist und dass die Retaineraufnahme (19) für den Stecker durch das freie Ende des Kolbens (11) gebildet ist.

11. Verfahren zur Herstellung eines Aktuators nach einem der Ansprüche 1 bis 10, **dadurch gekennzeichnet, dass** dessen Kolben/Bolzen-Kombination dadurch hergestellt wird, dass das Verstärkungselement (13) und die pyrotechnische Ladung (17) in ein Spritzgusswerkzeug eingelegt werden und danach die Kolben/BolzenKombination im 2K-Spritzgussverfahren spritzgegossen wird und dass die Kolben/Bolzen-Kombination mit dem Gehäuse (14) zusammengebaut wird.

## Claims

1. An actuator comprising a housing (14), with a pyrotechnic charge (17) and with a piston (11) which transitions into a bolt (12) which in the initial state protrudes from the housing (14) and upon ignition of the pyrotechnic charge (17) is at least partially drawn into the housing (14), wherein the combination of piston and bolt consists of a basic body (10) made of plastic, **characterised in that** the basic body (10), in the region of the bolt (12), includes a reinforcing element (13) which has the shape of a sleeve or of a tube and which surrounds the bolt (12), and **in that** the reinforcing element (13) is positively connected to the bolt (12).

2. The actuator according to claim 1, **characterized in that** the sleeve like or tubular reinforcing element (13) has at least one shaping (22) for reducing the internal cross section.

3. The actuator according to claim 1 or 2, **characterized in that** the reinforcing element (13) is made of metal.

4. The actuator according to one of claims 1 or 2, **characterized in that** the sleeve like reinforcing element (13) is made of plastic, in particular of PPS or partially aromatic polyamide.

5. The actuator according to any of claims 1 to 4, **characterised in that** an O-ring seal (15) is provided between the bolt (12) and the housing (14), and **in that** the reinforcing element (13) extends from the free end of the bolt (12) beyond this O-ring seal (15).

6. The actuator according to any of claims 1 to 5, **characterized in that** the housing (14) is made of metal.

7. The actuator according to any of claims 1 to 6, **characterised in that** the housing (14) has a constriction (20) protruding into a circumferential recess (25) of the piston (11) and thus limiting the path between the starting position and the end position of the piston (11).

8. The actuator according to claim 7, **characterised in that** in the recess (25) structures for energy intake, in particular shear elements (23, 24), are provided.

9. The actuator according to any of claims 1 to 8, **characterised in that** the housing (14) has a collar (21) for stiffening.

10. The actuator according to any of claims 1 to 9, **characterized in that** the pyrotechnic charge (17) is arranged in the form of an igniter in the piston (11) and **in that** the retainer reception (19) for the plug is formed by the free end of the piston (11).

11. A method for manufacturing an actuator according to any of claims 1 to 10, **characterised in that** the combination of piston and bolt is manufactured by inserting the reinforcing element (13) and the pyrotechnic charge (17) into an injection moulding tool and thereafter the combination of piston and bolt is injection moulded in a two-component injection moulding process, and **in that** the combination of piston and bolt is assembled with the housing (14).

## Revendications

1. Actionneur comportant un boîtier (14), pourvu d'une charge pyrotechnique (17) et d'un piston (11) qui est prolongé par un boulon (12) lequel s'étend, dans son état de départ, au-delà du boîtier (14) et lequel se retire au moins partiellement dans le boîtier (14) lorsque la charge pyrotechnique (17) est mise à feu, l'ensemble piston/boulon étant constitué d'un corps de base (10) en matière plastique, **caractérisé en ce que** le corps de base (10) présente, au niveau du boulon (12), un élément de renforcement (13) qui possède la forme d'une douille et/ou d'un tuyau et vient entourer le boulon (12), **et que** l'élément de renforcement (13) est lié au boulon (12) par complémentarité de forme.

2. Actionneur selon la revendication 1, **caractérisé en ce que** l'élément de renforcement (13) en forme de douille et/ou de tuyau possède au moins une forme (22) permettant de réduire la coupe transversale intérieure.

3. Actionneur selon les revendications 1 ou 2, **caractérisé en ce que** l'élément de renforcement (13) est constitué de métal.

4. Actionneur selon l'une des revendications 1 ou 2, **caractérisé en ce que** l'élément de renforcement (13) en forme de douille est constitué de matière plastique, notamment de PPS ou de polyamide partiellement aromatique.

5. Actionneur selon l'une des revendications 1 à 4, **caractérisé en ce qu'**un joint torique (15) est disposé entre le boulon (12) et le boîtier (14) et que l'élément de renforcement (13) s'étend de l'extrémité libre du boulon (12) jusque derrière ce joint torique (15).

6. Actionneur selon les revendications 1 à 5, **caractérisé en ce que** le boîtier (14) est constitué de métal.

7. Actionneur selon l'une des revendications 1 à 6, **caractérisé en ce que** le boîtier (14) possède un rétrécissement (20) qui s'étend dans un évidement périphérique (25) du piston (11) pour ainsi limiter la course entre la position de départ et la position finale du piston (11).

8. Actionneur selon la revendication 7, **caractérisé en ce que** des structures destinées à absorber l'énergie, s'agissant notamment d'éléments de cisaillement (23, 24), sont disposés dans l'évidement (25).

9. Actionneur selon les revendications 1 à 8, **caractérisé en ce que** le boîtier (14) possède un col (21) destiné à le rigidifier.

10. Actionneur selon l'une des revendications 1 à 9, **caractérisé en ce que** la charge pyrotechnique (17) est disposée dans le piston (11) sous forme d'un dispositif d'allumage et que l'organe de rétention (19) accueillant le connecteur est formé par l'extrémité libre du piston (11) .

11. Procédé de fabrication d'un actionneur selon l'une des revendications 1 à 10, **caractérisé en ce que** l'ensemble piston/boulon de ce dernier est fabriqué en plaçant l'élément de renforcement (13) et la charge pyrotechnique (17) dans un outil de moulage par injection pour ensuite réaliser l'ensemble piston/boulon en mettant en œuvre un moulage par injection à deux composants, et que l'ensemble piston/boulon est assemblé avec le boîtier (14).
